Europäisches Patentamt

European Patent Office

Office européen des brevets

(11) Publication number: **0 464 689 A1**

# EUROPEAN PATENT APPLICATION

(21) Application number: **91110687.0**

(22) Date of filing: **27.06.91**

(51) Int. Cl.5: **B60Q 1/00**

(30) Priority: **29.06.90 IT 6747290**

(43) Date of publication of application:
**08.01.92 Bulletin 92/02**

(84) Designated Contracting States:
**DE ES FR GB**

(71) Applicant: **CARELLO S.p.A.**
**Corso Unione Sovietica, 600**
**I-10135 Torino(IT)**

(72) Inventor: **Bottigliengo, Silvano**
**Via Luigi Einaudi, 19**
**I-10043 Orbassano(IT)**

(74) Representative: **Jorio, Paolo et al**
**Studio Torta, Via Viotti, 9**
**I-10121 Torino(IT)**

(54) An optical unit for vehicles.

(57) An optical unit (1) provided with at least first and second light beam emitters (2,3) having first and second transparent closure elements respectively separated from and adjacent to one another, the first closure element (13) being coupled to a fixed support (4), and the second closure element (21) being fixed to an associated reflector (23) connected to the fixed support (4) by means of a resilient snap-engagement device (33) the engagement of which with the fixed support (4) involves positive coupling between two portions (38,37) of the first (13) and second (21) transparent closure elements respectively.

The present invention relates to an optical unit for vehicles and, in particular, to an optical unit of the type comprising at least first and second light beam emitters having respective first and second transparent closure elements separated from but adjacent to one another, the first closure element being connectable to a fixed support; and resilient snap-engagable means for coupling the second transparent element to the fixed support.

In optical units of the above-described type the said two light beam emitters are generally constituted by a headlamp and a sidelight disposed adjacent one another, and the said fixed support is normally constituted by a cup-shape casing partially closed by the said first transparent element and having an external lateral portion housing and supporting the said sidelight.

In general, the sidelight includes, as well as the said second transparent closure element, a reflector fixedly connected to the second transparent element itself and carrying both the previously mentioned resilient snap-engageable means for coupling the second transparent element to the outer casing, and elements, for example one or more pins, adapted to engage respective reference elements carried by the outer casing when the said resilient snap-engageable means are brought into engagement with the external casing itself. In this way, with a single operation, it is possible to connect the second transparent element to the external casing, and to determine its position with respect to the external casing.

The known optical units of the above-described type have the disadvantage of requiring, for their practical realisation, an extremely high manufacturing precision, given that only extremely limited tolerances allow optical units to be made in which the said transparent elements are disposed at the given, possibly constant, distance from one another for all the optical units produced.

This derives from the fact that the said second transparent element is positioned uniquely with respect to the said fixed support or outer casing, and by the fact that if the two transparent elements are taken into consideration, the chain of tolerances which relate to them is an open loop.

The object of the present invention is that of providing an optical unit which will be free from the above described disadvantages, and in which the chain of tolerances by which the two transparent elements are related is a closed loop.

According to the present invention there is provided an optical unit for vehicles comprising at least first and second light beam emitters having respectively first and second transparent closure elements separated from but adjacent to one another, the first closure element being connectable to a fixed support; and resilient snap-engageable means for coupling the second transparent element to the fixed support, characterised by the fact that the said first and second transparent elements include respective first and second portions positively coupled together in a releasable manner when the said resilient snap-engageable means engage the said fixed support.

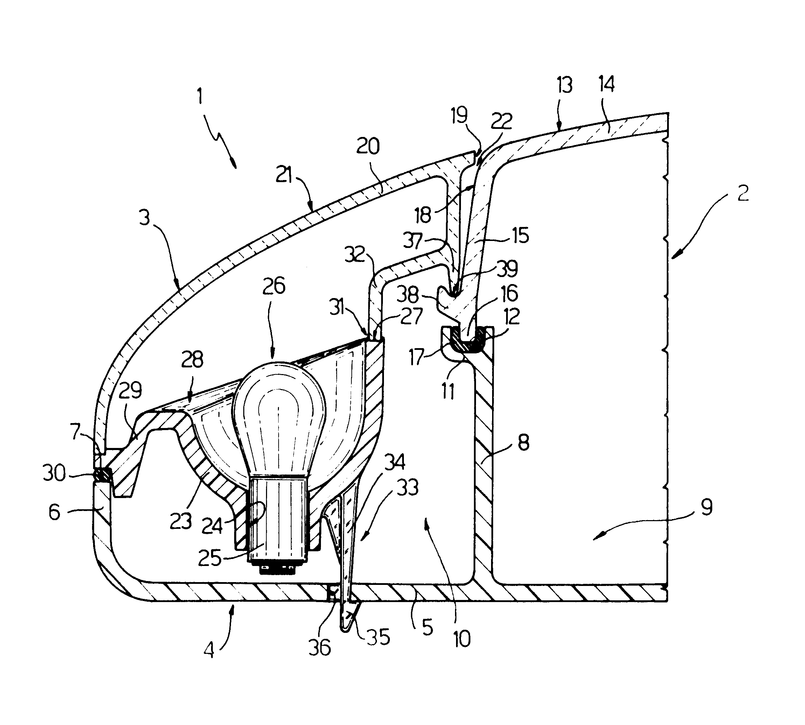

The invention will now be described with reference to the attached drawing, which schematically and in section illustrates a non-limitative preferred embodiment.

In the attached drawing the reference numeral 1 indicates an optical unit which comprises a headlamp 2 and a sidelight 3 having a common outer casing 4.

The casing 4 is substantially cup-shape and comprises a rear or bottom wall 5, forwardly from the outer periphery of which extends a side wall 6 substantially perpendicular to the wall 5 and forwardly limited by a flat edge 7.

Forwardly from an intermediate portion of the wall 5 extends a partition 8 which sub-divides the interior space within the casing 4 into two chambers 9 and 10, the chamber 9 of which constitutes the internal chamber for the headlamp 2. The partition 8 carries, connected to its forward edge, a channel 11 which defines a forwardly open groove 12 and extends, in a manner not illustrated, over the whole of the portion of the edge 7 of the wall 6 which surrounds the chamber 9.

The chamber 9 is closed at the front by a first, substantially cup-shape transparent closure element 13 disposed with its concavity facing the chamber 9. The transparent element 13 constitutes the transparent closure element for the headlamp 2, and includes a front wall 14 rearwardly from the periphery of which extends a side wall 15 limited at its rear edge by a tooth 16 which is engaged within the groove 12 with the interposition of a layer 17 of mastic or other equivalent sealing and connecting material.

The wall 15 has a lateral edge 18 which extends forwardly of that part of the channel 11 which extends along the partition 8, and is disposed in a position facing and adjacent to a lateral edge 19 of a front wall 20 of the second transparent closure element of the sidelight 3; the edges 18 and 19 defining a slot 22 of determined and substantially constant width.

In the optical unit 1 described the sidelight 3 comprises a generally parabolic reflector 23 which is provided with an axial rear hole 24 engaged by the rear socket 25 for a lamp 26, and is limited at the front by an annular edge 27 in correspondence with which the reflector 23 is fixedly connected to a peripheral edge of the transparent element 21. In particular, a first portion 28 of the said peripheral edge is disposed along a flange 29 extending outwardly from the front edge of the reflector 23 and disposed in contact, by means of the interposition of a layer 30 of mastic or other equivalent adhesive and sealing material, to that part of the edge 7 left free by the channel 11. A second portion 31 of the said peripheral edge is, on the other hand, disposed adjacent to the partition 8 and carries fixedly connected thereto a rear edge of a side wall 32 constituting an integral part of the transparent element 21 and extending rearwardly from the wall 20 in a direction substantially parallel to the partition 8 between the edge 19 and the portion 31.

Contact between the flange 29 and the edge 7 of the wall 6 is guaranteed by a resilient snap-engagement device 33 carried by the reflector 23 and comprising at least one resilient projection 34 extending rearwardly from a rear surface of the reflector 23 and carrying at its free end a tooth 35 snap-engaged through a hole 36 formed in the wall 5 in correspondence with the chamber 10. The wall 32 is provided with a rib 37 which projects rearwardly from the wall 32 in a direction substantially parallel to the projection 34, and extends along the wall 32 in a direction substantially parallel to the edge 19.

From the portion of the side wall 15 of the transparent body 13 disposed forwardly of the partition 8, a rib 38 disposed in a position adjacent the channel 11 and parallel to the channel 11 itself, extends towards the sidelight 3, defining with the outer surface of the associated portion of the wall 15 a groove 39 which is engaged under pressure by the free end of the rib 37 upon the act of snap-engagement between the projection 34 and the rear wall 5 of the casing 4 to position the transparent element 21 exactly with respect to the transparent element 13 and to maintain the width of the slot 22 constantly equal to a predetermined desired value.

## Claims

1. An optical unit (1) for vehicles comprising at least first and second light beam emitters (2,3) having respective first and second transparent closure elements (13,22) separated from and adjacent to one another, the first closure element (13) being connectable to a fixed support (4); and resilient snap-engagement means (33) for coupling the second transparent element (21) to the fixed support (4), characterised by the fact that the said first (13) and second (21) transparent element respectively comprise first and second portions (38,37) positively coupled together in a releasable manner when the said resilient snap-engagement means (33) engages the said fixed support (4).

2. An optical unit according to claim 1, characterised by the fact that the said first and second portions (38,37) define a seat (39) on the first transparent element (13) and a projection (37) on the second transparent element (21), the said projection (37) engaging under pressure in the said seat (39) when the said resilient snap-engagement means (33) engage the said fixed support (4).

3. An optical unit according to claim 2, characterised by the fact that the said projection (37) and the said resilient snap-engagement means (33) are disposed on the same side of the second transparent element (21) and are substantially parallel to one another.

4. An optical unit according to any preceding claim, characterised by the fact that the second light beam emitter (3) includes a reflector (23) fixedly connected to the second transparent element (21); the said resilient snap-engagement means (33) being carried by the said reflector (23).

European
Patent Office

EUROPEAN SEARCH
REPORT

Application Number

EP 91 11 0687

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X,A | FR-A-2 314 843   (CIBIE PROJECTEURS)<br>* page 5; figures 1-3 *<br>– – – | 1,2-4 | B 60 Q 1/00 |
| X | GB-A-2 093 174   (WESTFÄLISCHE METALL INDUSTRIE KG & CO)<br>* abstract; figures 1-4 *<br>– – – | 1 | |
| A | DE-A-2 656 755   (ADAM OPEL AG)<br>* figures 2, 3 *<br>– – – | 1-4 | |
| A | GB-A-2 076 516   (ROBERT BOSCH GMBH)<br>* abstract; figure 3 *<br>– – – | 1 | |
| A | FR-A-2 630 077   (KOITO SEISAKUSHO CO)<br>* figures 4-7 *<br>– – – – – | 2 | |

TECHNICAL FIELDS
SEARCHED (Int. Cl.5)

B 60 Q

The present search report has been drawn up for all claims

| Place of search | Date of completion of search | Examiner |
|---|---|---|
| The Hague | 06 September 91 | ONILLON C.G.A. |